# EUROPEAN PATENT APPLICATION

(11) **EP 3 808 575 A1**
(43) Date of publication of application: **21.04.2021**
(21) Application number: 19819708.9
(22) Date of filing: 29.05.2019
(51) Int. Cl.: B60C 9/22, B29D 30/38, B29D 30/70, B60C 1/00, B60C 9/18

(54) **TIRE AND METHOD FOR MANUFACTURING BELT LAYER STRUCTURE MEMBER**

(30) Priority: 14.06.2018 JP 2018113888
(71) Applicant: Bridgestone Corporation, Chuo-Ku Tokyo 104-8340 (JP)
(72) Inventor: HASEGAWA, Keiichi, Tokyo 104-8340 (JP)
(74) Representative: Oxley, Robin John George
(86) International application number: PCT/JP2019/021329
(87) International publication number: WO 2019/239896

(57) **Abstract**

A tire includes: an annular tire frame member; and a belt layer that is provided at an outer periphery of the tire frame member, wherein the belt layer includes a reinforcing cord spirally wound at intervals in a tire width direction, a resin layer that surrounds the reinforcing cord and integrally covers the reinforcing cord across an entire area of the reinforcing cord in the tire width direction, and a bonding layer that is bonded to one surface of the resin layer.

## Description

### Technical Field

This disclosure relates to a tire and a method of manufacturing a belt layer constituent member.

### Background Art

It is common for pneumatic tires mounted to automobiles to have a structure including a belt comprising plural layers equipped with two or more angled belt plies configured to include cords angled with respect to the tire circumferential direction on the tire radial direction outer side of a carcass and a reinforcing layer disposed at the tire radial direction outer side of the angled belt plies (e.g., see Japanese Patent Application Laid-open No. 2013-244930 and Japanese Patent Application Laid-open No. 2013-220741).

### SUMMARY OF INVENTION

### Technical Problem

Because the pneumatic tires of patent documents 1 and 2 are equipped with two more angled belt plies and a reinforcing layer, it is possible to secure, for example, in-plane shear rigidity needed to reinforce the crown portion of the carcass, but it is difficult to reduce the weight of the tires because the number of layers including the plies and the reinforcing layer is large.

In recent years, needs such as reducing the weight of pneumatic tires have grown, and pneumatic tires that meet those needs are in demand.

In consideration of the above circumstances, it is an object of this disclosure to provide a pneumatic tire that both secures the in-plane shear rigidity of a belt layer and achieves a reduction in weight.

### Solution to Problem

This disclosure is a tire including: an annular tire frame member; and a belt layer that is provided at an outer periphery of the tire frame member, wherein the belt layer includes a reinforcing cord spirally wound at intervals in a tire width direction, a resin layer that surrounds the reinforcing cord and integrally covers the reinforcing cord across an entire area of the reinforcing cord in the tire width direction, and a bonding layer that is bonded to one surface of the resin layer.

In this tire, the belt layer that is provided at the outer periphery of the tire frame member includes the resin layer that surrounds the spirally wound reinforcing cord and integrally covers the reinforcing cord across the entire area of the reinforcing cord in the tire width direction, whereby a reduction in weight is achieved.

For this reason, the bond strength in the row direction of the reinforcing cord is enhanced compared to a case where a reinforcing cord member in which the reinforcing cord is coated with resin is spirally wound around the outer periphery of the tire frame member and the adjacent side surfaces of the reinforcing cord member are heat-welded and fixed to each other.

### Advantageous Effects of Invention

According to this aspect, a tire that both secures the in-plane shear rigidity of a belt and achieves a reduction in weight can be provided.

### BRIEF DESCRIPTION OF DRAWINGS

FIG. 1 is a sectional view showing a tire pertaining to a first embodiment.
FIG. 2 is a sectional view of main portions showing a film attaching step of the first embodiment.
FIG. 3 is a sectional view of main portions showing a temporary fixing step of the first embodiment.
FIG. 4 is a sectional view of main portions showing a resin supplying step in a resin forming step of the first embodiment.
FIG. 5 is a sectional view of main portions showing a resin solidifying step in the resin forming step of the first embodiment.
FIG. 6 is a sectional view of main portions showing a method of manufacturing a belt layer constituent member of the first embodiment.
FIG. 7 is a sectional view of main portions showing a winding step of a second embodiment.
FIG. 8 is a sectional view of main portions showing a melting step in a band-like member solidifying step of the second embodiment.
FIG. 9 is a sectional view of main portions showing a solidifying step in the band-like member solidifying step of the second embodiment.
FIG. 10 is a sectional view of main portions showing a layering step of a third embodiment.
FIG. 11 is a sectional view of main portions showing a melting step in a sheet solidifying step of the third embodiment.
FIG. 12 is a sectional view of main portions showing a solidifying step in the sheet solidifying step of the third embodiment.

### DESCRIPTION OF EMBODIMENTS

### <First Embodiment

A first implementation will be described below based on the drawings. In the drawings, S denotes a tire circumferential direction, arrow W denotes a tire axial direction (which may also be referred to as a tire width direction), and arrow R denotes a tire radial direction. "Tire axial direction" refers to a direction that is parallel to the axis of rotation of the tire.

The dimensions of each part are measured according to the method described in the 2018 edition of YEAR BOOK published by the Japan Automobile Tyre Manufacturers Association (JATMA). When TRA standards or ETRTO standards are applied in the place of use or the place of manufacture, those standards are followed.

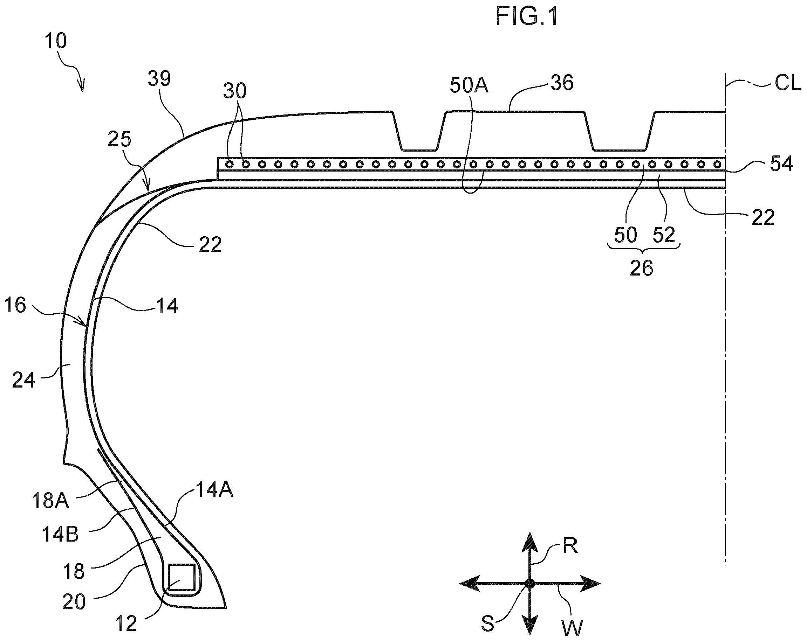

As shown in FIG. 1, a tire 10 of this embodiment is, for example, what is called a radial tire used in passenger cars and includes a pair of bead portions 20 in which bead cores 12 are embedded (only one is shown in the drawings), with a carcass 16 comprising a single carcass ply 14 extending between one bead portion 20 and the other bead portion 20.

The carcass ply 14 is formed by coating, with a coating rubber (not shown in the drawings), plural cords (not shown in the drawings) extending in the radial direction of the tire 10. That is, the tire 10 of this embodiment is what is called a radial tire. The material of the cords of the carcass ply 14 is, for example, PET, but it may also be another conventionally known material.

Tire width direction end portions of the carcass ply 14 are turned up outward in the tire radial direction about the bead cores 12. The portion of the carcass ply 14 that extends from one bead core 12 to the other bead core 12 is called a body portion 14A, and the portions of the carcass ply 14 that are turned up from the bead cores 12 are called turn-up portions 14B.

Bead fillers 18 whose thickness gradually decreases from the bead cores 12 outward in the tire radial direction are disposed between the body portion 14A and the turn-up portions 14B of the carcass ply 14. It will be noted that the bead portions 20 are the portions of the tire 10 on a tire radial direction inner side from tire radial direction outer ends 18A of the bead fillers 18.

An innerliner 22 comprising rubber is disposed at the tire inner side of the carcass 16, and side rubber layers 24 comprising a first rubber material are disposed at a tire width direction outer sides of the carcass 16.

It will be noted that in this embodiment a tire casing 25 is configured by the bead cores 12, the carcass 16, the bead fillers 18, the innerliner 22, and the side rubber layers 24. The tire casing 25, in other words, is a tire frame member that forms a frame of the tire 10.

### (Belt Layer)

A belt layer 26 is disposed at an outer side of the crown portion of the carcass 16, or in other words a tire radial direction outer side of the carcass 16, and the belt layer 26 is firmly adhered to the outer peripheral surface of the carcass 16.

The belt layer 26 includes a reinforcing cord 30 spirally wound at intervals in the tire axial direction, which is the tire width direction, and a resin layer 50 that surrounds the reinforcing cord 30 and integrally covers the reinforcing cord 30 across an entire area of the reinforcing cord 30 in the tire axial direction. In other words, the reinforcing cord 30 is embedded in the resin layer 50.

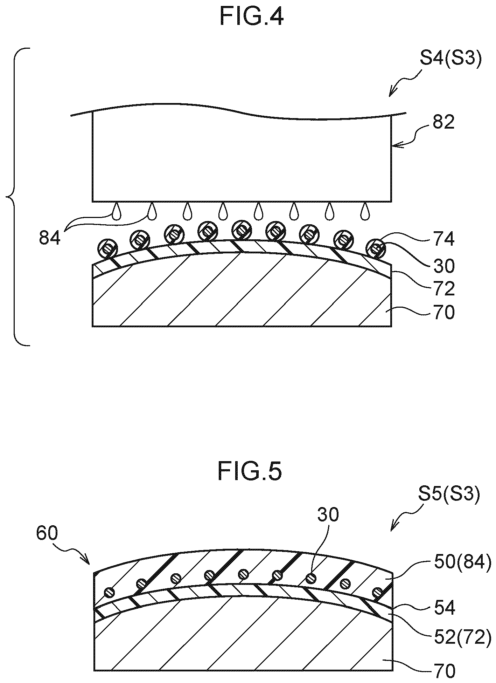

Furthermore, the belt layer 26 has a bonding layer 52 bonded to one surface 50A of the resin layer 50, and the belt layer 26 has a bonded portion 54 where the resin layer 50 and the bonding layer 52 are melted and bonded to each other (see FIG. 5).

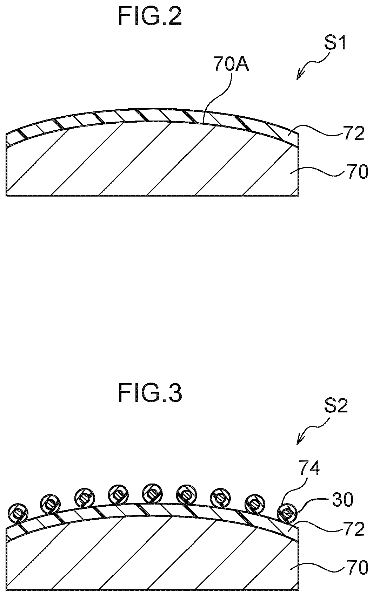

The reinforcing cord 30 can be configured by a monofilament (single strand) of metal fiber or organic fiber or a multifilament (twisted strands) in which these fibers are twisted together. In this embodiment, the bond strength of a resin coating 74 that coats the peripheral surface of the reinforcing cord 30 (see FIG. 3) is enhanced by configuring the reinforcing cord 30 with a multifilament (twisted strands) in which metal fibers are twisted together.

The resin layer 50 and the bonding layer 52 are configured by a resin material including synthetic resins and natural resins, whereby a reduction in weight is achieved, and the resin layer 50 and the bonding layer 52 are configured by a thermoplastic elastomer, for example.

The resin material used for the resin layer 50 and the bonding layer 52 of this embodiment is not limited to a thermoplastic elastomer, and thermoplastic resins, thermosetting resins, and other commodity plastics, as well as engineering plastics (including super engineering plastics) can be used for the resin material. It will be noted that the resin material here does not include vulcanized rubber.

Thermoplastic resins (including thermoplastic elastomers) are polymer compounds whose material becomes soft and fluid with an increase in temperature and becomes relatively hard and has a certain strength when cooled. In this specification, polymer compounds whose material becomes soft and fluid with an increase in temperature and becomes relatively hard and has a certain strength when cooled and which have a rubber-like elasticity are distinguished as thermoplastic elastomers, and polymer compounds whose material becomes soft and fluid with an increase in temperature and becomes relatively hard and has a certain strength when cooled and which do not have a rubber-like elasticity are distinguished as thermoplastic resins that are not elastomers.

Examples of thermoplastic resins (including thermoplastic elastomers) include thermoplastic polyolefin elastomers (TPO), thermoplastic polystyrene elastomers (TPS), thermoplastic polyamide elastomers (TPA), thermoplastic polyurethane elastomers (TPU), thermoplastic polyester elastomers (TPC), and dynamically crosslinked thermoplastic elastomers (TPV), as well as thermoplastic polyolefin resins, thermoplastic polystyrene resins, thermoplastic polyamide resins, and thermoplastic polyester resins.

Furthermore, as the thermoplastic material, for example, one whose temperature of deflection under load (a load of 0.45 MPa) specified in ISO 75-2 or ASTM D648 is 78 °C or higher, whose tensile strength at yield specified in JIS K7113 is 10 MPa or more, whose tensile strain at break specified in JIS K7113 is 50% or more, and whose Vicat softening temperature (A test) specified in JIS K7206 is 130 °C can be used.

Thermosetting resins are polymer compounds that form a three-dimensional network structure and harden with an increase in temperature, and examples thereof include phenolic resins, epoxy resins, melamine resins, and urea resins.

It will be noted that, in addition to the already mentioned thermoplastic resins (including thermoplastic elastomers) and thermosetting resins, commodity plastics such as (meth)acrylic resin, EVA resin, polyvinyl chloride resin, fluorine-based resin, and silicone-based resin may also be used for the resin material.

For the resin configuring the belt layer 26, a resin material with a higher Young's modulus than that of the rubber configuring the side rubber layers 24 and a second rubber material configuring a tread 36 is used.

### (Manufacturing Method)

FIG. 2 to FIG. 6 are drawings showing a method of manufacturing a belt layer constituent member pertaining to this embodiment, and belt layer constituent member 60 (see FIG. 5) is a member that is provided at the outer periphery of the tire casing 17 and configures the belt layer 26.

When manufacturing the belt layer constituent member 60, as shown in FIG. 2, a film 72 made of resin is wound around and attached to an outer peripheral surface 70A of a base 70 made of metal and formed in a hollow cylindrical shape (a film attaching step S1). Examples of the material of the film 72 include thermoplastic elastomers, but the material may also be any of the aforementioned resins.

As shown in FIG. 3, the reinforcing cord 30 whose peripheral surface is covered with the resin coating 74 is spirally wound onto the film 72. At this time, the resin coating 74 is heated and melted by, for example, blowing hot air onto the reinforcing cord 30 to thereby weld the molten resin coating 74 to the film 72. Then, the resin coating 74 solidifies, whereby the reinforcing cord 30 is temporarily fixed to the film 72 (a temporary fixing step S2).

Here, examples of the material of the resin coating 74 include thermoplastic elastomers, but the material may also be any of the aforementioned resins.

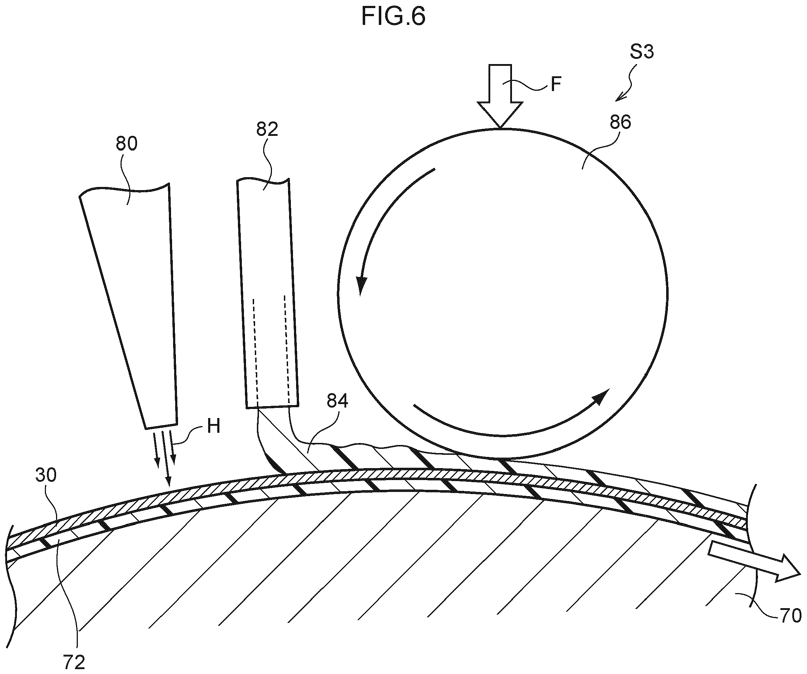

As shown in FIG. 6, hot air H from a heating nozzle 80 is blown onto the reinforcing cord 30 that has been temporarily fixed on the film 72 to thereby melt the resin coating 74 of the reinforcing cord 30 and the surface of the film 72.

Then, as shown in FIG. 4 and FIG. 6, a resin 84 before solidification is supplied from a supply nozzle 82 (a resin supplying step S4 in a resin layer forming step S3). The supply nozzle 82 supplies the resin 84 to the spirally wound reinforcing cord 30 across the entire area of the reinforcing cord 30 in the row direction thereof.

Next, as shown in FIG. 5 and FIG. 6, the resin 84 that has been supplied onto the reinforcing cord 30 is pressed by a pressing roller 86 with a predetermined pressing force F, whereby the resin 84 fills the spaces between the adjacent side surfaces of the reinforcing cord 30, the resin 84 before solidification and the molten resin coating 74 are integrated, and the resin 84 is deprived of its heat by the pressing roller 56 to be cooled and solidifies (a resin solidifying step S5 in the resin layer forming step S3).

Because of this, the reinforcing cord 30 temporarily fixed on the film 72 is integrally covered across the entire area of the reinforcing cord 30 with the resin 84, and the resin 84 before solidification and the film 72 melt together and become bonded, thereby forming the resin layer 50 bonded to the bonding layer 52 comprising the film 72 that has solidified (the resin layer forming step).

These steps S1 to S5 form the belt layer constituent member 60 that has the resin layer 50 in which the reinforcing cord 30 is embedded, the bonding layer 52 comprising the film 72 bonded to the resin layer 50, and the bonded portion 54 where the resin layer 50 and the bonding layer 52 are melted and bonded to each other.

Then, the belt layer constituent member 60 is detached from the base 70 by, for example, reducing the diameter of the base 70 with a diameter reducing mechanism, and the belt layer 26 is provided and formed on the outer periphery of the tire casing 17 as shown in FIG. 1.

### (Action)

In the tire 10 of this embodiment, the belt layer 26 provided at the outer periphery of the tire casing 17 that is a tire frame member includes the resin layer 50 that surrounds the spirally wound reinforcing cord 30 and integrally covers the reinforcing cord 30 across the entire area of the reinforcing cord 30 in the tire axial direction (tire width direction).

For this reason, the bond strength in the row direction of the reinforcing cord 30 can be enhanced without seams as there are when a reinforcing cord member in which the reinforcing cord 30 is coated with resin is spirally wound around the outer periphery of the tire casing 17 and the adjacent side surfaces of the reinforcing cord member are heat-welded to each other. Furthermore, a reduction in weight is achieved because the amount of steel can be reduced compared to a normal two-layer crisscrossing belt.

Because of this, the tire 10 that both secures the in-plane shear rigidity of the belt layer 26 and achieves a reduction in weight can be provided.

Furthermore, in this embodiment, the thickness of the belt layer 26 can be changed by adjusting the thickness of the film 72 and/or adjusting the amount of the resin 84 that is supplied onto the reinforcing cord 30 temporarily fixed to the film 72.

Moreover, compared to a case where the adjacent side surfaces of a reinforcing cord member wound around the tire casing 17 are heat-welded and fixed to each other, welding difficulty is reduced, so manufacturing efficiency is enhanced.

Additionally, when spirally winding the reinforcing cord 30, the intervals between the adjacent side surfaces of the reinforcing cord 30 can be adjusted. For this reason, at the shoulder side of the tire 10 where the tension load increases during travel and in the neighborhood of the tire equatorial plane CL, the intervals between the adjacent side surfaces of the reinforcing cord 30 can be reduced to form a tighter wind, and in other places the intervals between the adjacent side surfaces of the reinforcing cord 30 can be increased to form a looser wind.

Because of this, the reinforcing cord 30 can be appropriately disposed in accordance with the tension load, so the weight of the tire 10 can be reduced compared to a case where the reinforcing cord 30 must be tightly wound across the entire area of the reinforcing cord 30 in the tire axial direction.

Furthermore, the belt layer 26 has the bonded portion 54 where the resin layer 50 and the bonding layer 52 are melted and bonded to each other.

Because of this, the bonding of the resin layer 50 and the bonding layer 52 to each other can be performed at the same time in the step of covering the reinforcing cord 30 with the melted resin 84.

Additionally, in the resin supplying step S4 in the resin layer forming step, the spirally wound reinforcing cord 30 is temporarily fixed to the film 72. For this reason, when integrally covering with the resin 84 the reinforcing cord 30 on the film 72, positional shifting of the reinforcing cord 30 can be inhibited.

### <Second Embodiment>

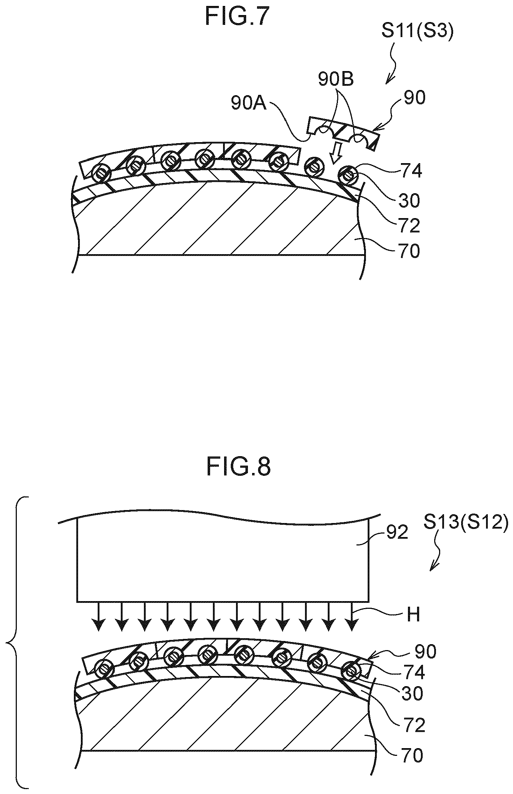

FIG. 7 to FIG. 9 are drawings showing a method of manufacturing the belt layer constituent member pertaining to a second embodiment; regarding portions that are identical or equivalent to those in the first embodiment, the same reference signs are assigned thereto and description thereof will be omitted, and only portions that are different will be described.

That is, in this embodiment, the aforementioned film attaching step S1 and the temporary fixing step S2 are the same as in the first embodiment, but the resin layer forming step S3 is different.

In the resin layer forming step S3 of this embodiment, as shown in FIG. 7, a band-like member 90 made of resin is spirally wound along the reinforcing cord 30 onto the reinforcing cord 30 that has been temporarily fixed on the film 72 (a winding step S11 in the resin layer forming step S3).

Examples of the material of the band-like member 90 include thermoplastic elastomers, but the material may also be any of the aforementioned resins.

The band-like member 90 has a width dimension that covers two adjacent segments of the reinforcing cord 30, and is formed in the shape of a plate having a predetermined thickness. Two grooves 90B that are semicircular in cross section are formed in an inner surface 90A of the band-like member 90 on the reinforcing cord 30 side, and each groove 90B is formed in a size that can accommodate part of the reinforcing cord 30.

It will be noted that although in this embodiment the band-like member 90 having the grooves 90B is described as an example, the embodiment is not limited to this and may also use the band-like member 90 having the grooves 90B.

Furthermore, the band-like member 90 is set to have a width dimension such that adjacent segments of the band-like member 90 are disposed in tight contact with each other in a state in which the reinforcing cord 30 is accommodated in the grooves 90B.

Here, although the band-like member 90 in which the two grooves 90B are formed is described as an example, the number of the grooves 90B formed may also be one or may also be three or more. In the case of forming plural grooves 90B, the reinforcing cord 30 with a number of segments matching the number of grooves is wound in parallel around the film 72.

Then, as shown in FIG. 8, the band-like member 90 is melted by, for example, blowing hot air H from a heating nozzle 92 onto and heating the band-like member 90 that has been wound onto the reinforcing cord 30 (a melting step S13 in a band-like member solidifying step S12).

It will be noted that although in this embodiment the hot air H is blown from the heating nozzle 92 to melt the entire wound band-like member 90 after the band-like member 90 has been wound onto the reinforcing cord 30, the embodiment is not limited to this. For example, the hot air H from the heating nozzle 92 may also be blown onto the band-like member 90 to melt the band-like member 90 as the band-like member 90 is being wound onto the reinforcing cord 30.

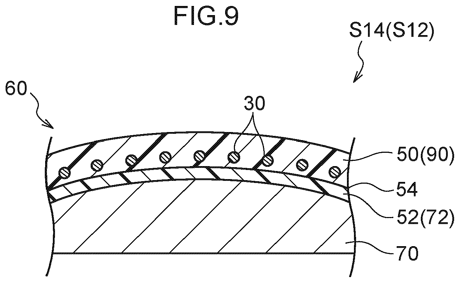

Next, the band-like member 90 (resin) in the molten state on the reinforcing cord 30 is pressed by a pressing roller for example, so that, as shown in FIG. 9, the band-like member 90 (resin) in the molten state fills the spaces between the adjacent side surfaces of the reinforcing cord 30 and the band-like member 90 (resin) in the molten state is integrated with the resin coating 74 of the reinforcing cord 30. At this time, the band-like member 90 (resin) in the molten state is deprived of its heat by the pressing roller to be cooled, whereby it solidifies to form the resin layer 50 (a solidifying step S14 in the band-like member solidifying step S12).

In this embodiment also, the belt layer constituent member 60 can be formed by spirally winding the band-like member 90 made of resin onto the reinforcing cord 30 that has been temporarily fixed to the film 72 and then melting and thereafter solidifying the band-like member 90 to form the resin layer 50.

### <Third Embodiment>

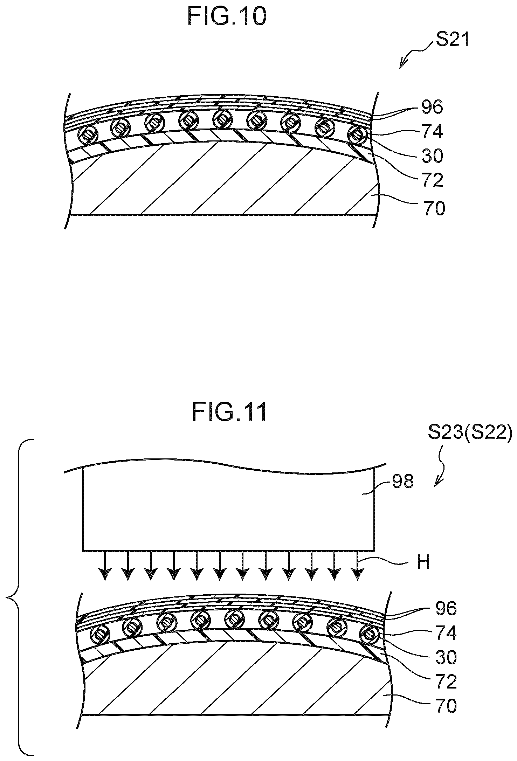

FIG. 10 to FIG. 12 are drawings showing a method of manufacturing the belt layer constituent member pertaining to a third embodiment; regarding portions that are identical or equivalent to those in the first embodiment, the same reference signs are assigned thereto and description thereof will be omitted, and only portions that are different will be described.

That is, in this embodiment, the aforementioned film attaching step S1 and the temporary fixing step S2 are the same as in the first embodiment, but the resin layer forming step S3 is different.

In the resin layer forming step S3 of this embodiment, as shown in FIG. 10, a sheet 96 made of resin is plurally layered on the reinforcing cord 30 that has been temporarily fixed on the film 72 (a layering step S21).

Examples of the material of the sheet 96 include thermoplastic elastomers, but the material may also be any of the aforementioned resins.

The sheet 96 has a width dimension that covers the spirally wound reinforcing cord 30 across the entire area of the reinforcing cord 30 in the row direction of the reinforcing cord 30.

In the layering step S21, plural sheets 96 shaped like strips may be placed on top of each other and layered on the reinforcing cord 30, or a single sheet 96 may be lap wound to plurally layer the sheet 96 on the reinforcing cord 30.

Then, as shown in FIG. 11, the sheet 96 that has been layered on the reinforcing cord 30 is heated by, for example, blowing hot air H from a heating nozzle 92 onto it to thereby melt the sheet 96 (a melting step S23 in a sheet solidifying step S22).

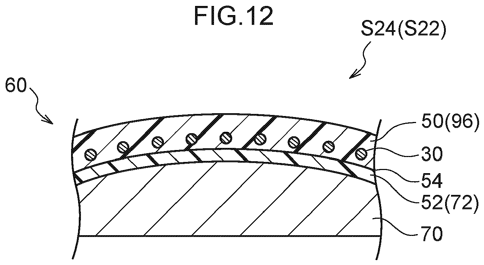

Next, the sheet 96 (resin) in the molten state on the reinforcing cord 30 is pressed by a pressing roller for example, so that, as shown in FIG. 12, the sheet 96 (resin) in the molten state fills the spaces between the adjacent side surfaces of the reinforcing cord 30 and the sheet 96 (resin) in the molten state is integrated with the resin coating 74 of the reinforcing cord 30. At this time, the sheet 96 (resin) in the molten state is deprived of its heat by the pressing roller to be cooled, whereby it solidifies to form the resin layer 50 (a solidifying step S24 in the sheet solidifying step S22).

In this embodiment also, the belt layer constituent member 60 can be formed by plurally layering the sheet 96 made of resin on the reinforcing cord 30 that has been temporarily fixed to the film 72 and then melting and thereafter solidifying the sheet 96 to form the resin layer 50.

It will be noted that although in each of the embodiments a case where the film 72 forming the resin layer 50 and the resin 84, the band-like member 90, and the sheet 96 forming the bonding layer 52 comprise the same material was described as an example, the disclosure is not limited to this.

For example, even when the film 72 forming the resin layer 50, the resin 84 forming the bonding layer 52, the band-like member 90, and the sheet 96 comprise different materials, as long as the resin layer 50 and the bonding layer 52 can be bonded to each other, handling when mounting to the tire casing 17 becomes easy.

The disclosure of Japanese Patent Application No. 2018-113888, filed on June 14, 2018, is incorporated in its entirety herein by reference.

All documents, patent applications, and technical standards mentioned in this specification are incorporated herein by reference to the same extent as if each individual document, patent application, or technical standard were specifically and individually indicated to be incorporated by reference.

## Claims

1. A tire comprising:
an annular tire frame member; and
a belt layer that is provided at an outer periphery of the tire frame member,
wherein the belt layer includes a reinforcing cord spirally wound at intervals in a tire width direction, a resin layer that surrounds the reinforcing cord and integrally covers the reinforcing cord across an entire area of the reinforcing cord in the tire width direction, and a bonding layer that is bonded to one surface of the resin layer.

2. The tire of claim 1, wherein the belt layer includes a bonded portion where the resin layer and the bonding layer are melted and bonded to each other.

3. A method of manufacturing a belt layer constituent member that is provided at an outer periphery of an annular tire frame member, the belt layer constituent member manufacturing method comprising:
a film attaching step of attaching a film made of resin to a tubular base;
a temporary fixing step of spirally winding a reinforcing cord onto the film and temporarily fixing the reinforcing cord to the film; and
a resin layer forming step of forming a resin layer that integrally covers an entire area of the reinforcing cord and is bonded to the film.

4. The belt layer constituent member manufacturing method of claim 3, wherein the resin layer forming step forms the resin layer by supplying a resin before solidification onto the film, to which the reinforcing cord has been temporarily fixed, and solidifying the resin.

5. The belt layer constituent member manufacturing method of claim 3, wherein the resin layer forming step includes:
a winding step of spirally winding a band-like member made of resin onto the reinforcing cord; and
a band-like member solidifying step of melting and thereafter solidifying the band-like member that has been wound onto the reinforcing cord to thereby form the resin layer.

6. The belt layer constituent member manufacturing method of claim 3, wherein the resin layer forming step includes:
a layering step of plurally layering a sheet made of resin on the reinforcing cord; and
a sheet solidifying step of melting and thereafter solidifying the sheet that has been layered on the reinforcing cord, to thereby form the resin layer.
